## Europäisches Patentamt
## European Patent Office
## Office européen des brevets

(19)

(11) Veröffentlichungsnummer: **0 008 622**
B1

(12) # EUROPÄISCHE PATENTSCHRIFT

(45) Veröffentlichungstag der Patentschrift: **16.02.83**

(51) Int. Cl.³: **B 23 B 51/16, B 28 D 1/14**

(21) Anmeldenummer: **79102096.9**

(22) Anmeldetag: **25.06.79**

(54) **Bohrwerkzeug zur Herstellung einer hinterschnittenen Bohrung.**

(30) Priorität: **05.07.78 DE 7820164 U**

(73) Patentinhaber: **HILTI Aktiengesellschaft**
**FL-9494 Schaan (LI)**

(43) Veröffentlichungstag der Anmeldung:
**19.03.80 Patentblatt 80/6**

(72) Erfinder: **Boehm, Edgar**
**Onkel-Fritz-Weg 1a**
**D-2800 Bremen 41 (DE)**

(45) Bekanntmachung des Hinweises auf die Patenterteilung:
**16.02.83 Patentblatt 83/7**

(74) Vertreter: **Berg, Wilhelm, Dr. et al,**
**Dr. Berg, Dipl.-Ing. Stapf, Dipl.-Ing. Schwabe, Dr.**
**Dr. Sandmair Patentanwälte Postfach 860245**
**D-8000 München 86 (DE)**

(84) Benannte Vertragsstaaten:
**AT BE CH FR GB IT LU NL SE**

(56) Entgegenhaltungen:
**DE - A - 1 652 520**
**DE - A - 2 331 467**
**DE - A - 2 723 785**
**DE - B - 2 544 468**
**DE - U - 7 820 164**
**US - A - 2 168 176**
**US - A - 2 495 583**
**US - A - 3 748 052**

Bohrwekzeug zur Herstellung einer hinterschnittenen Bohrung

Die Erfindung betrifft ein Bohrwerkzeug zur Herstellung, einer hinterschnittenen Bohrung in weichem Mauerwerk, insbesondere Gasbeton, bestehend aus einem zentrischen, seitlich abgeplatteten Primärbohrer zur Erzeugung einer zylindrischen Hauptbohrung une einem gegenüber dem Primärbohrer verschwenkbaren Sekundärbohrer, der zur Erzeugung des Hinterschnitts von einer den Primärbohrer konzentrisch umgebenden, gegen die Kraft einer Feder auf dem Schaft des Primärbohrers axial verschieblichen Hülse vermittels einer Kulissenführung seitlich ausgeschwenkt werden kann.

Ein derartiges Bohrwerkzeug, allerdings zum Bohren in Gestein und hartem Mauerwerk, ist beispielsweise aus der DE—A—23 31 467 bekannt. Die mit einem derartigen Bohrwerkzeug erzeugte Bohrung, deren konischer Abschnitt sich in Bohrrichtung erweitert, dient zur formschlüssigen Aufnahme eines Ankers für ein mit diesem verbindbares Befestigungselement. Dieses bekannte Bohrwerkzeug hat sich in der Praxis aus einer Reihe von Gründen nicht einführen können. Für Arbeiten in Leicht baustoffen ist sein Primärbohrer ungeeignet. Vor allem ist die Abfuhr Bohrkleins — auch bei hartem Werkstoff — unmöglich, und der äußere Teil der Hülse dreht sich mit dem Bohrwerkzeug mit und hält einen Primär- und Sekundärbohrer durchsetzenden Stift, der als Kulissenstein dient. Dadurch ist die Handhabung des Bohrwerkzeugs nicht gefahrlos.

Aus der DE—A—1 652 520 ist eine Hohlbohrkrone zum Ausbohren von Löchern und Durchbrüchen größeren Durchmessers in Mauerwerk bekannt, die an Ihrem offenen Ende einen Schneidenkranz aud Hartmetall enthält und mit ihrem anderen Ende fest mit dem Schaft eines zentrischen Primärbohrers verschraubbar ist. Die Hohlbohrkrone besitzt seitliche Aussparungen, die einen Wesentlichen Teil des Gesamtumfanges des Hohl zylinders ausmachen und dazu dienen, die Abfuhr des Bohrkleins aus der Hohlbohrkrone zu ermöglichen.

Aus der US—A—2 168 176 ist ein Bohrwerkzeug zur Herstellung einer hinterschnittenen Bohrung bekannt, welches einen meißelförmigen Bohrer besitzt, der während eines Bohrvorganges aus der zentralen Lage verschwenkbar ist. Um den Bohrer herum ist eine drehbar gelagerte Hülse vorgesehen, deren offenes Ende am Mauerwerk abstützbar ist und relativ große Ausnehmungen zur Abfuhr des Bohrkleins besitzt.

Aufgabe der Erfindung ist es demgegenüber, ein funktionsfähiges Bohrwerkzeug der Eingangs genannten Art so weiterzubilden, das neben einer verbesserten Abfuhr des Bohrkleins auch eine bessere Handhabung des Bohrwekzeugs ermöglicht.

Diese Aufgabe wird erfindungsgemäß dadurch gelöst, daß die Hülse als Korb mit einem der Führung auf dem Schaft dienenden Bodenteil, sich vom Bodenteil parallel zur Achse erstreckenden schmalen Stegen, die in Achs- und Umfangsrichtung große Durchbrüche freilassen, und einen die Stege an ihren anderen Enden verbindenden Randring ausgebildet ist, daß eine äußerer Kranz des Bodenteils gegenüber einem Innenring des Bodenteils drehbar gelagert ist, daß sich der Innenring innerhalb des Korbes in zwei sich beiderseits des Primärbohrers parallel zu diesem erstreckenden Armen fortsetzt, die an ihren freien Enden durch einen Stift verbunden sind, der Schlitze im Primär- und Sekundärbohrer durchsetzt und den Stein der Kulissenführung bildet.

Die Vorteile der Erfindung liegen insbesondere darin, daß der Stein der Kulissenführung im Innenring der Hülse gelagert ist, und daß der äußere Teil der Hülse ausreichend große Ausnehmungen zur Abfuhr des Bohrkleins besitzt und insbesondere sich nicht mit dem Bohrer dreht, so daß der äußere Teil der Hülse beim Bohren, gefahrlos von einem Benutzer gehalten werden kann, was insbesondere beim Beginn der Bohrarbeiten vorteilhaft ist.

Vorteilhafte Wieterbildungen der Erfindung sind durch die Merkmale der Unteransprüche gekennzeichnet.

Im folgenden wird ein Ausführungsbeispiel anhand der Zeichnung näher erläutert. Es zeigen:

Fig. 1 eine teilweise geschnittene Seitenansicht des Bohrwerkzeugs;

Fig. 2 eine ebenfalls teilweise geschnittene, gegenüber der Darstellung in Fig. 1 über 90° um die Hauptachse gedrehte Seitenansicht des Bohrwerkzeugs; und

Fig. 3 eine Schnittansicht entlang der Linie III—III in Fig. 2.

Fig. 4 eine der Fig. 1 entsprechende Seitenansicht eines anderen Ausführungsbeispiels; und

Fig. 5 eine der Fig. 2 entsprechende Darstellung des anderen Ausführungsbeispiels.

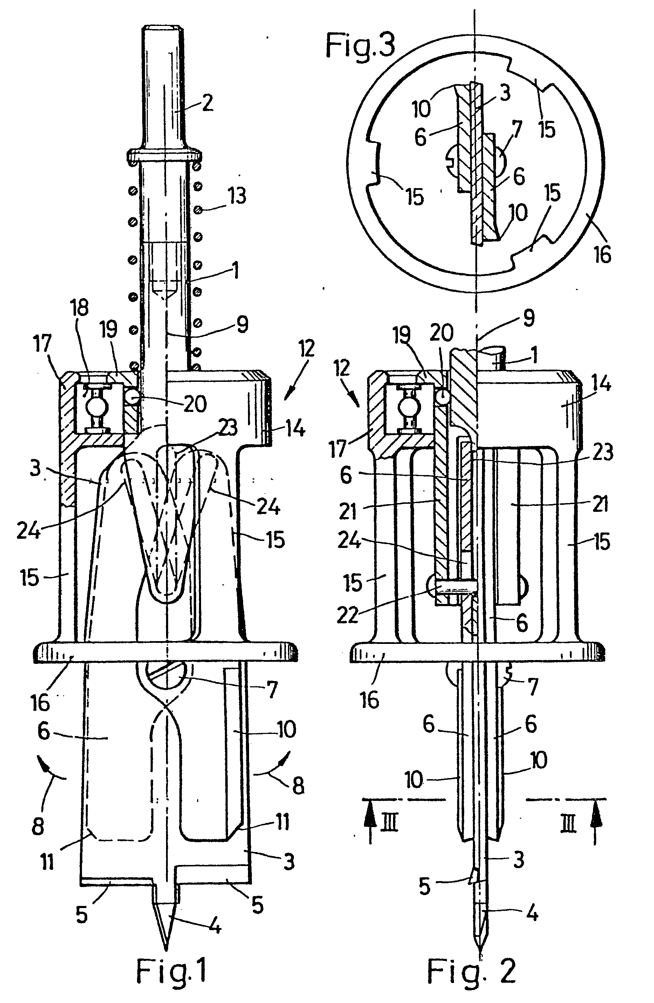

Am zentrischen Schaft 1 des Bohrwerkzeugs, welches mit dem Schaftabschnitt 2 in eine Bohrmaschine eingespannt werden kann, ist der Primärbohrer in Form eines Senkers 3 befestigt. Dieser besteht, wie insbesondere Fig. 2 deutlich macht, aus einer relativ dünnen Platte von im wesentlichen rechteckiger, Jedoch in Bohrrichtung nach hinten leicht verjüngter Gestalt. Sie trägt vorn eine Zentrierspitze 4 und beidseits davon sich radial erstreckende Schneiden 5, die leicht vorwärts gekrümmt sind (Fig. 2).

Auf den beiden großflächigen Seiten des Senkers 3 sind je eine Schneidplatte 6 um die Achse des den Senker 3 durchsetzenden Bolzens 7 schwenkbar gelagert. Sie sind in Richtung der Pfeile 8 entgegengesetzt ausschwenkbar und bilden zusammen den Sekundärbohrer. Entlang ihren nach außen weisenden Seitenkanten, die im Ruhezustand (Fig. 1) etwa parallel zur Hauptachse 9 des Bohrwerkzeugs verlaufen, sind Schneiden 10 befestigt, die im Querschnitt ähnlich den Schneiden 5 des Primärbohrers ausgebildet und im Bereich der Vorderkanten 11 abgeschrägt sind.

Auf dem Schaft 1 ist eine Hülse in Form eines Korbes 12 in Richtung der Hauptachse 9 verschieblich geführt. Eine Druckfeder 13 spannt den Korb 12 in die in Fig. 1 dargestellte Ruhestellung vor. Der Korb 12 besteht aus einem Bodenteil 14, drei gleichmäßig am Umfang verteilten Stegen 15 und einem deren freie Enden verbindenden, dem Arbeitsbereich des Bohrwerkzeugs zugewandten Randring 16 (Fig. 3). Er ist vorzugsweise aus Kunststoff gefertigt. Der Bodenteil 14 besteht aus einem äußeren Kranz 17, welcher die Stege 15 trägt und mittels eines Kugellagers 18 gegenüber einem Innenring 19 des Bodenteils 14 drehbar gelagert ist.

Im Innenring 19 des Korbes 12 sind mehrere am Umfang verteilt angeordnete Kugeln 20 gehalten, die eine leichte Axialverschieblichkeit des Korbes 12 auf dem Schaft 1 gewährleisten. Zum Arbeitsbereich des Bohrwerkzeugs hin setzt sich der Innenring 19 in einer geschlitzten Hülse fort, die auf diese Weise innerhalb des Korbes 12 zwei sich beiderseits des Primärbohrers 3 parallel zu diesem erstreckende Arme 21 bildet. Deren freie Enden sind durch einen Stift 22 verbunden, welcher einen Längsschlitz 23 im Primärbohrer 3 durchsetzt, so daß die Längsverschieblichkeit des Korbes 12 gegen die Feder 13 auf dem Schaft 1 nicht beeinträchtigt wird.

Der Stift 22 bildet den Stein der Kulissenführung, welche das Ausschwenken der Sekundärbohrer-Platten 6 steuert. Zu diesem Zwecke sind in den Platten 6 Schlitze 24 angeordnet, welche in der Ruhestellung des Sekundärbohrers schräg zur Hauptachse 9 verlaufen. Wird jedoch der Korb 12 gegen die Kraft der Feder 13 — in Fig. 1 nach oben — verschoben, so werden die Schlitze 24 vom Stift 22 in die Richtung der Hauptachse 9 geschwenkt, wodurch die anderen Enden der Platten 6 in Richtung der pfeile 8 auswärts ausgeschwenkt werden.

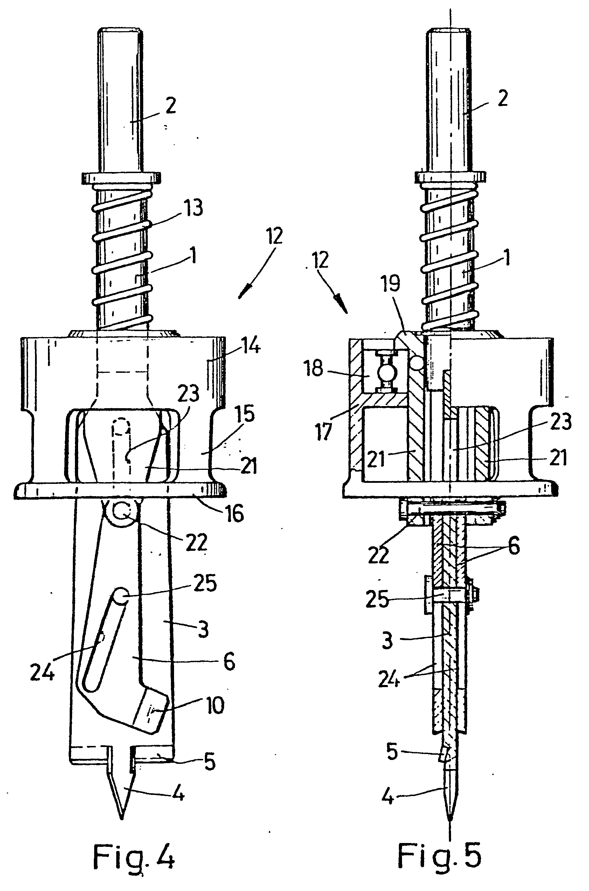

Beim Ausführungs beispiel der Fig. 4 und 5 ist lediglich die Ausbildung und Anlenkung der Sekundärbohrer anders. Der die Arme 21 des Korbes 12 verbindende Stift 22 bildet hier das Schwenklager für die Platten 6, die mit ihrem einen Ende am Stift 22 aufgehängt sind. Der Stift 22 durchsetzt daher nur einen Längsschlitz 23 im primärbohrer 3. Dieser trägt ferner einen zentrisch angeordneten Stift 25, welcher die schräg zur Hauptachse 9 verlaufenden Schlitze 24 in den Platten 6 durchsetzt und als Stein mit diesen im Sinne einer Kulissenführung zusammenwirkt.

Im Gegensatz zum ersten Ausführungsbeispiel sind hier die Sekundärbohrer-Platten 8 L-förmig ausgebildet und haben eine parallel zum Schlitz 24 verlaufende Schneide, so daß sich nicht — wie im ersten Falle — ein konischer Hinterschnitt, sondern eine zylindrischer Hinterschnitt ergibt.

**Patentansprüche**

1. Bohrwerkzeug zur Herstellung einer hinterschnittenen Bohrung in weichem Mauerwerk, insbesondere Gasbeton, bestehend aus einem zentrischen, seitlich abgeplatteten Primärbohrer (3) zur Erzeugung einer zylindrischen Hauptbohrung und einem gegenüber dem Primärbohrer (3) verschwenkbaren Sekundärbohrer (6), der zur Erzeugung des Hinterschnitts von einer den Primärbohrer (3) konzentrisch umgebenden, gegen die Kraft einer Feder (13) auf dem Schaft (1) des Primärbohrers (3) axial verschieblichen Hülse (15, 16, 17) vermittels einer Kulissenführung (24, 22) seitlich ausgeschwenkt werden kann, dadurch gekennzeichnet, daß die Hülse (15, 16, 17) als Korb (12) mit einem der Führung auf dem Schaft (1) dienenden Bodenteil (14), sich vom Bodenteil parallel zur Achse (9) erstreckenden schmalen Stegen (15), die in Achs- und Umfangsrichtung große Durchbrüche freilassen, und einen die Stege (15) an ihren anderen Enden verbindenden Randring (16) ausgebildet ist, daß ein äußerer Kranz (17) des Bodenteils (14) gegenüber einem Innenring (19) des Bodenteils (14) drehbar gelagert ist, und daß sich der Innenring (19) innerhalb des Korbes (12) in zwei sich beiderseits des Primärbohrers (3) parallel zu diesem erstreckenden Armen (21) fortsetzt, die in ihren freien Enden durch einen Stift (22) verbunden sind, der Schlitze (23, 24) in Primär- und Sekundärbohrer durchsetzt und den Stein der Kulissenführung bildet.

2. Bohrwerkzeug nach Anspruch 1, dadurch gekennzeichnet, daß zwischen dem Kranz (17) und dem Innenring (19) ein Kugellager (18) angeordnet ist.

3. Bohrwerkzeug nach Anspruch 1 oder 2, dadurch gekennzeichnet, daß im Bodenteil (14) bzw. dessen Innenring (19) Kugeln (20) gehalten sind, die auf dem Schaft (1) des Primärbohrers (3) laufen.

4. Bohrwerkzeug nach Anspruch 1, dadurch gekennzeichnet, daß ein am Primärbohrer zentrisch befestigter Stift (25) einen im Ruhezustand schräg zur Hauptachse (9) verlaufenden Schlitz (24) im Sekundärbohrer (6) durchsetzt und den Stein der Kullissenführung bildet.

5. Bohrwerkzeug nach einem der vorhergehenden Ansprüche, dadurch gekennzeichnet, daß der Primärbohrer aus einem flachen Senker (3) mit Zentrierspitze (4) und beidseitigen radialen Schneiden (5) besteht.

6. Bohrwerkzeug nach einem der vorhergehenden Ansprüche, dadurch gekennzeichnet, daß der Sekundärbohrer aus zwei beidseitig des Primärbohrers (3) angeordneten und entgegengesetzt ausschwenkbaren Platten (6) besteht.

7. Bohrwerkzeug nach Anspruch 6, dadurch gekennzeichnet, daß die Vorderkanten (11) der Schneiden (10) der Sekundärbohrer-Platten (6) abgeschrägt sind.

**Revendications**

1. Outil foreur pour le perçage d'un trou en contre-dépouille dans la maçonnerie tendre, en particulier dans le béton au gaz, se composant d'un foret principal (3), monté en position centrale et aplati latéralement, pour la formation d'une forure principale cylindrique et d'un foret secondaire (6) qui s'articule sur le foret principal (3) et qui, pour la formation de la contre-dépouille, peut pivoter latéralement vers l'extérieur, au moyen d'un guide à coulisse (24, 22), sous l'action d'un manchon (15, 16, 17) qui entoure concentriquement le foret principal (3) et qui est mobile axialement sur la tige (1) du foret principal (3) contre la force antagoniste d'un ressort (13), caractérisé en ce que le manchon (15, 16, 17) est réalisé sous forme de corbeille (12) avec une partie de fond (14) qui sert au guidage sur la tige (1), des montants minces (15) qui s'étendent parallèlement à l'axe (9) à partir de cette partie de fond et qui laissent libres des évidements de grandes dimensions dans la direction axiale et la direction circonférentielle, et un bord annulaire (16) qui relie les montants (15) à leurs autres extrémités, en ce qu'une couronne extérieure (17) de la partie de fond (14) est montée à rotation par rapport à une bague intérieure (19) de cette partie de fond (14), et en ce que la bague intérieure (19) se prolonge, à l'intérieur de la corbeille (12), en deux bras (21) qui s'étendent des deux côtés du foret principal (3) parallèlement à celui-ci et qui sont reliés, à leurs extrémités libres, par une cheville (22) qui traverse des fentes (23, 24) pratiquées dans les forets principal et secondaire et qui constitue le coulisseau du guide à coulisse.

2. Outil foreur selon la revendication 1, caractérisé en ce qu'un roulement à billes (18) est interposé entre la couronne (17) et la bague intérieure (19).

3. Outil foreur selon la revendication 1 ou 2, caractérisé en ce qu'il est maintenu, dans la partie de fond (14) ou dans la bague intérieure (19) de celle-ci, des billes (20) qui roulent sur la tige (1) du foret principal (3).

4. Outil foreur selon la revendication 1, caractérisé en ce qu'une cheville (25) fixée en position centrale sur le foret principal traverse une fente (24) qui est pratiquée dans le foret secondaire et qui est oblique par rapport à l'axe principale (9) en position de repos, et constitue le coulisseau du guide à coulisse.

5. Outil foreur selon l'une quelconque des revendications 1 à 4, caractérisé en ce que le foret principal est constitué par une mèche de téton (3) plate comportant une pointe de centrage (4) et de arêtes coupantes (5) qui s'étendent radialement des deux côtés de cette pointe.

6. Outil foreur selon l'une quelconque des revendications 1 à 5, caractérisé en ce que le foret secondaire se compose de deux plaques (6) qui sont disposées de part et d'autre du foret principal et qui peuvent pivoter vers l'extérieur en sens opposés.

7. Outil foreur selon la revendication 6, caractérisé en ce que les bords avant (11) des arêtes coupantes (10) des plaques (6) du foret secondaire sont biseautés.

**Claims**

1. Drill tool for the production of an undercut drill hole in soft brick work, especially gas concrete, consisting of a centric primary drill (3), flattened on the sides for the production of a cylindrical main drill hole, and a secondary drill (6), pivotable with respect to the primary drill (3), the secondary drill can be swung out latterly by means of a slotted link device (24, 22), for the production of the undercut, by a casing (15, 16, 17) surrounding concentrically the primary drill (3) and axially shiftable against the force of a spring (13) on the shaft (1) of the primary drill (3), characterised in that the casing (15, 16, 17) is formed as cage (12) comprising a bottom part (14) serving the guidance on the shaft (1), narrow legs (15) extending from the bottom part parallel to the axis (9), which leave free large holes in the axial and circumferential direction, and a marginal ring (16) connecting the legs (15) at their other ends, that an outer collar (17) of the bottom part (14) is mounted rotatably as regards an inner ring (19) of the bottom part (14), and that the inner ring (19) continues within said cage (12) with two arms (21) extending at both sides of the primary drill (3) and parallel thereto, which (arms) are connected at their free ends by a pin (22) which extends through slits (23, 24) in the primary and secondary drills and forms the sliding block of the slotted link device.

2. Drill tool according to claim 1, characterized in that a ball bearing (18) is positioned between the collar (17) and the inner ring (19).

3. Drill tool according to claim 1 or 2, characterized in that balls (20) are held in the bottom part (14) or its inner ring (19), which run on the shaft (1) of the primary drill (3).

4. Drill tool according to claim 1, characterized in that a pin (25) fixed centrically to the primary drill extends through a slit (24) in the secondary drill (6), which (slit) runs at a slant to the main axis (9) when at rest and forms the sliding block of the slotted link device.

5. Drill tool according to one of the previous claims characterized in that the primary drill consists of a flat counterbore drill (3) with centering point (4) and radial blades (5) at both sides.

6. Drill tool according to one of the previous claims, characterized in that the secondary drill consists of two plates (6) positioned at both sides of the primary drill (3) and swing-outable in opposite directions.

7. Drill tool according to claim 6, characterized in that the front edge (11) of the blades (10) of the secondary-drill plate (6) are bevelled.

Fig.3

Fig.1

Fig. 2

Fig. 4  Fig. 5